# FASCICULE DE BREVET EUROPEEN

(11) **EP 1 470 545 B1**
(45) Date de publication et mention de la délivrance du brevet: **08.08.2007**
(21) Numéro de dépôt: 03709905.8
(22) Date de dépôt: 27.01.2003
(51) Int. Cl.: G10K 11/168

(54) **PANNEAU D'ETANCHEITE ET D'INSONORISATION POUR VEHICULE AUTOMOBILE**
DICHTUNGS- UND SCHALLDÄMPFUNGSPLATTE FÜR AUTOMOBILE
SEALING AND SOUND-PROOFING PANEL FOR A MOTOR VEHICLE

(30) Priorité: 28.01.2002 FR 0201067
(43) Date de publication de la demande: 27.10.2004
(73) Titulaire: Sofitec SA, 78530 Buc (FR)
(72) Inventeur: PROUX, Georges, F-78220 Viroflay (FR)
(74) Mandataire: Cabinet Martinet & Lapoux
(86) Numéro de dépôt international: PCT/FR2003/000248
(87) Numéro de publication internationale: WO 2003/065345

(56) Documents cités:
- DE-C- 10 009 281
- US-A- 4 840 832
- US-A- 5 296 657
- US-A- 5 298 694

## Description

La présente invention concerne un panneau d'étanchéité et d'insonorisation, en particulier pour véhicule automobile.

On connaît déjà des panneaux de ce type destinés notamment à être interposés entre des tôles de carrosserie et des garnitures dans les habitacles des véhicules automobiles, en particulier dans les portes des véhicules, et qui comprennent une feuille d'étanchéité en matière plastique thermoformable cellulaire, par exemple en polyéthylène ou en propylène, et une couche d'insonorisation en mousse de polyuréthane ou en fibres fines entremêlées de matière plastique thermoformable, par exemple de polyester.

On a notamment proposé (US-A-48 40 832) un tel panneau ayant une feuille d'étanchéité en matière plastique thermodéformable attachée à une couche de fibres entremêlées d'une grosseur de 3 à 20 deniers.

On a aussi proposé (EP-A-0373135 et EP-A-0949066) de tels panneaux, en particulier pour les pavillons de véhicules automobiles, comprenant une feuille de matière thermoplastique cellulaire et une couche de fibres non tissées en polyester, qui est formée d'un mélange de fibres liantes à bas point de fusion et de fibres à point de fusion élevé, ces fibres ayant une finesse comprise entre 1 et 15 deniers (0,11-1,65 tex) ou entre 4,5 et 25 deniers (0,5-2,75 tex) et une longueur comprise entre 1 et 15 cm environ.

La présente invention a notamment pour but d'améliorer les performances d'insonorisation et d'isolation thermique de ces panneaux et de simplifier leur fabrication.

Elle propose à cet effet un panneau d'étanchéité et d'insonorisation, en particulier pour véhicule automobile, comprenant au moins une feuille d'étanchéité en matière plastique cellulaire et thermoformable, sur laquelle est fixée une couche d'insonorisation formée de fibres fines entremêlées de matière plastique, caractérisé en ce que ladite couche d'insonorisation est un mélange de fibres de finesses différentes, inférieures à 0,5 tex, comprenant environ 10 à 30% en poids de fibres d'une finesse inférieure à 0,1 tex et par exemple d'environ 0,08-0,09 tex et environ 25 à 45% en poids de fibres ayant une finesse comprise entre 0,1 et 0,2 tex.

On a constaté, de façon surprenante, que les performances d'insonorisation et d'isolation thermique d'un panneau selon l'invention étaient nettement améliorées lorsqu'on utilisait un mélange de fibres très fines, ayant des finesses différentes toutes inférieures à 0,5 tex, certaines de ces fibres pouvant avoir une finesse inférieure à 0,1 tex.

Cette modification de la finesse des fibres par rapport aux panneaux équivalents de la technique antérieure se traduit par une amélioration très sensible de l'absorption acoustique et de l'isolation thermique.

Avantageusement, ladite couche d'insonorisation comprend des fibres composites, formées de polymères ayant des températures de ramollissement différentes, l'un de ces polymères ayant une température de ramollissement inférieure aux températures de thermoformage utilisées pour la mise en forme du panneau.

Le polymère à bas point de ramollissement a un rôle de liant entre les fibres de la couche d'insonorisation.

Dans un mode de réalisation particulier, ces fibres composites comprennent un noyau de matière thermoplastique, par exemple de polyester, qui est revêtu ou entouré d'une matière thermoplastique identique à ou compatible avec la matière plastique cellulaire de la feuille d'étanchéité.

Cela permet une fixation simple de la couche d'insonorisation sur la feuille d'étanchéité, par exemple par soudure aux ultrasons. On évite ainsi la mise en oeuvre d'un adhésif ou le recours à un procédé comprenant des étapes de chauffage de la feuille d'étanchéité, et de dépôt et de calandrage de la couche d'insonorisation sur la feuille d'étanchéité.

Dans un mode de réalisation particulièrement avantageux de l'invention, la couche d'insonorisation comprend environ 10 à 30% en poids de fibres ayant une finesse inférieure ou égale à 0,1 tex, environ 25 à 40% en poids de fibres ayant une finesse inférieure ou égale à 0,2 tex (par exemple 25 à 45% en poids de fibres entre 0,1 et 0,2 tex environ), environ 20 à 40% en poids de fibres composites précitées ayant une finesse inférieure ou égale à 0,5 tex environ, et par exemple comprise entre 0,4 et 0,5 tex environ, de 10 à 20% en poids environ de fibres ayant une finesse de l'ordre de 0,3 à 0,4 tex, et quelques pourcents en poids de résine acrylique ayant pour rôle d'empêcher les microfibres de s'envoler ou de s'éparpiller à l'extérieur de la couche d'insonorisation.

L'invention concerne également un procédé de fabrication d'un tel panneau, selon la revendication 15.

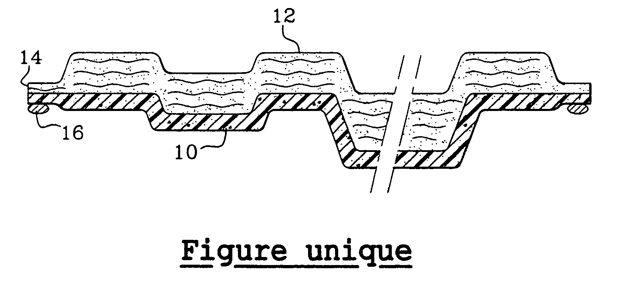

L'invention sera mieux comprise et d'autres caractéristiques, détails et avantages de celle-ci apparaîtront plus clairement à la lecture de la description qui suit, faite à titre d'exemple en référence au dessin annexé, qui est une vue schématique en coupe d'un panneau selon l'invention.

Dans ce dessin, qui représente en coupe un panneau d'étanchéité et d'insonorisation pour véhicule automobile, en particulier un panneau de porte, ou encore un panneau de revêtement interne du capot moteur ou d'encapsulage du moteur du véhicule, ou un panneau de pavillon de véhicule, la référence 10 désigne une feuille de matière thermoplastique étanche, telle qu'une mousse de polyéthylène réticulé ou de polypropylène non réticulé à cellules fermées, ayant une épaisseur comprise entre 1 et 5 mm environ, par exemple de l'ordre de 2 à 3 mm, et une densité qui est typiquement de l'ordre de 50 à 60 kg/m³.

Sur la feuille 10 est fixée une couche 12 d'insonorisation en fibres fines de matière thermoplastique, notamment de polyester, l'épaisseur de la couche 12 étant comprise par exemple entre 8 et 32 mm environ, sa densité étant comprise entre 100 et 400g/m² environ.

La couche 12 est un mélange de fibres très fines, ayant une finesse ou masse spécifique par unité de longueur inférieure à 0,5 tex c'est-à-dire à 0,5 g/1000 m de longueur. Ce mélange comprend de préférence des fibres ayant une finesse inférieure à 0,1 tex, des fibres d'une finesse inférieure ou égale à 0,2 tex, d'autres fibres ayant une finesse de l'ordre de 0,3 à 0,4 tex, et des fibres composites ayant une finesse inférieure ou égale à 0,5 tex environ, ces fibres composites étant formées de deux polymères ayant par exemple des points de ramollissement ou des points de fusion différents.

Dans un mode de réalisation, ces microfibres sont en polyester et les fibres composites précitées comprennent un noyau de polyester ayant un point de fusion supérieur aux températures de thermoformage utilisées pour la mise en forme du panneau selon l'invention, et qui est revêtu ou entouré de fibres de polyester ou d'une autre matière thermoplastique ayant un point de fusion ou un point de ramollissement inférieur aux températures de thermoformage utilisées. Ainsi, ces fibres composites ont, grâce à leur revêtement ou leur entourage de fibres à bas point de fusion ou de ramollissement, un rôle de liant dans la couche d'insonorisation.

Dans un autre mode de réalisation particulièrement avantageux de l'invention, la feuille d'étanchéité 10 est en mousse de polypropylène non réticulé et les fibres composites de la couche 12 d'insonorisation comprennent un noyau de polyester entouré de fibres de polypropylène non réticulé, ce qui permet d'assurer la fixation de la couche 12 d'insonorisation sur la feuille 10 d'étanchéité par une soudure aux ultrasons.

Comme indiqué plus haut, la couche 12 d'insonorisation comprend quelques pourcents de résine acrylique ou analogue empêchant une dispersion des microfibres dans l'air environnant, par exemple. 5% environ.

Comme représenté sur le dessin, le bord périphérique 14 du panneau selon l'invention est de préférence comprimé à chaud, pour avoir une épaisseur d'environ 1 à 3 mm par exemple, et reçoit sur la face libre de la feuille d'étanchéité 10 un cordon 16 d'une matière adhésive appropriée, par exemple du type « hotmelt », pour la fixation du panneau selon l'invention sur une tôle de support.

Dans ce cas, le procédé de fabrication d'un panneau selon l'invention est le suivant :
- on part d'une feuille d'étanchéité 10 plane en mousse de polyoléfine, par exemple de polypropylène non réticulé, sur laquelle on fixe une couche 12 plane de microfibres entremêlées, ayant des finesses différentes comme précité.

Notamment, ce mélange de fibres peut avoir la composition suivante :
- 20% environ de fibres de polyester ayant une finesse de l'ordre de 0,08-0,09 tex,
- environ 35% de fibres de polyester ayant une finesse de l'ordre de 0,15-0,18 tex,
- environ 15% de fibres de polyester ayant une finesse de l'ordre de 0,3-0,4 tex,
- environ 30% de fibres composites d'une finesse de 0,4-0,5 tex environ, comprenant un noyau de polyester et un revêtement ou un entourage de fibres de polypropylène non réticulé.

La fixation de la couche 12 sur la feuille 10 est assurée par une soudure par points aux ultrasons.

Ensuite, l'ensemble de la feuille 10 et de la couche 12 subit un thermoformage, par exemple dans un moule à dépression, la couche 12 étant thermocomprimée localement si nécessaire.

Le rebord périphérique 14 de faible épaisseur du panneau est formé à ce moment, par thermocompression.

Ensuite, un cordon adhésif 16 du type « holtmelt » par exemple, est déposé sur la partie de la feuille d'étanchéité 10 formant ce rebord périphérique. Le cordon 16 de matière adhésif est ensuite recouvert d'un élément de protection, tel qu'un papier siliconé par exemple, ce qui permet d'empiler les panneaux les uns sur les autres pour leur stockage et leur transport et de les séparer ensuite facilement les uns des autres pour les fixer par collage sur des tôles de véhicules automobiles.

Dans une variante de réalisation, le cordon de colle 16 peut être remplacé par un film de matière adhésive, recouvrant tout ou partie de la face de la feuille 10 opposée à la couche 12 d'insonorisation, et déposé par exemple par sérigraphie, par projection, etc...

Ce film adhésif est ensuite recouvert, ou non, d'une feuille de papier de protection, d'un film de matière plastique, etc...

De façon générale, le panneau selon l'invention présente d'excellentes qualités d'insonorisation, en particulier par absorption et isolation acoustique, et d'isolation thermique.

L'absorption acoustique de panneaux selon l'invention a été mesurée par une méthode d'essai standard en cabine alpha: un panneau de 1,2 m² est déposé sur le plancher de la cabine, et on mesure le temps de réverbération à des fréquences comprises entre 400 et 10.000 Hz, c'est-à-dire le temps pour que le niveau sonore diminue de 60 dB après arrêt de l'excitation sonore. On en déduit le coefficient d'absorption acoustique.

Pour les panneaux selon l'invention, ce coefficient est voisin de 80 entre 2000 et 10.000 Hz quand l'épaisseur de la couche 12 est de 20 mm et sa densité de 200g/m², et il est supérieur ou égal à 90 entre 1000 et 8000 Hz quand l'épaisseur de la couche 12 est de 32 mm et sa densité de 400g/m².

De tels panneaux ont par ailleurs une bonne résistance thermique (d'environ 0,28m2/kW dans un exemple de réalisation).

Dans tous les cas, les performances d'absorption acoustique et d'isolation acoustique et thermique peuvent être améliorées en augmentant l'épaisseur de la couche 12 et/ou la densité des fibres de cette couche.

Bien entendu, sans sortir du cadre de l'invention, le panneau d'étanchéité et d'insonorisation peut comprendre une couche ou un film de matière thermoplastique associé à la feuille 10 d'étanchéité, sur l'une ou l'autre face de celle-ci.

Ce film thermoplastique peut avoir des fonctions d'antiadhérence, et/ou d'amélioration de l'insonorisation, et/ou de rigidité et/ou de protection contre les huiles, les acides, etc..., et/ou encore de revêtement d'aspect.

En variante, les deux faces de la feuille 10 d'étanchéité peuvent comporter une couche 12 d'insonorisation du type précité.

## Revendications

1. Panneau d'étanchéité et d'insonorisation, en particulier pour véhicule automobile, comprenant au moins une feuille (10) d'étanchéité en matière plastique cellulaire et thermoformable, sur laquelle est fixée une couche (12) d'insonorisation formée de fibres fines entremêlées de matière plastique, **caractérisé en ce que** la couche (12) d'insonorisation est un mélange de fibres de finesses différentes, inférieures à 0,5 tex, comprenant environ 10 à 30% en poids de fibres d'une finesse inférieure à 0,1 tex et par exemple d'environ 0,08-0,09 tex et environ 25 à 45% en poids de fibres ayant une finesse comprise entre 0,1 et 0,2 tex.

2. Panneau selon la revendication 1, **caractérisé en ce que** la couche (12) d'insonorisation comprend des fibres composites, formées de polymères ayant des températures de ramollissement différentes, l'un de ces polymères ayant une température de ramollissement inférieure aux températures de thermoformage utilisées pour la mise en forme du panneau.

3. Panneau selon la revendication 1, **caractérisé en ce que** la couche (12) d'insonorisation comprend des fibres composites, formées d'un noyau d'une matière thermoplastique recouverte ou entourée d'une autre matière thermoplastique identique à ou compatible avec la matière de la feuille d'étanchéité (10).

4. Panneau selon la revendication 3, **caractérisé en ce que** les fibres composites comprennent un noyau de polyester et un revêtement ou un entourage de polypropylène.

5. Panneau selon l'une des revendications 2 à 4, **caractérisé en ce que** la couche (12) d'insonorisation comprend environ 20 à 40% en poids de fibres composites précitées ayant une finesse de 0,9-0,5 tex environ.

6. Panneau selon l'une des revendications 1 à 5, **caractérisé en ce que** la couche (12) d'insonorisation comprend environ 10 à 20% en poids de fibres ayant une finesse comprise entre 0,3 et 0,4 tex.

7. Panneau selon l'une des revendications précédentes, **caractérisé en ce que** la couche (12) d'insonorisation est essentiellement en fibres de polyester.

8. Panneau selon la revendication 7, **caractérisé en ce que** la couche (12) d'insonorisation comprend :
- 20% environ de fibres de polyester ayant une finesse de l'ordre de 0,08-0,09 tex,
- environ 35% de fibres de polyester ayant une finesse de l'ordre de 0,15-0,18 tex,
- environ 15% de fibres de polyester ayant une finesse de l'ordre de 0,3-0,4 tex,
- environ 30% de fibres composites d'une finesse de 0,9-0,5 tex environ, comprenant un noyau de polyester et un revêtement ou un entourage de fibres de polypropylène non réticulé.

9. Panneau selon l'une des revendications précédentes, **caractérisé en ce que** la couche (12) d'insonorisation comprend quelques pourcents en poids de résine acrylique ou analogue.

10. Panneau selon l'une des revendications précédentes, **caractérisé en ce que** la couche (12) d'insonorisation est localement d'épaisseur réduite, suite à une thermocompression réalisée lors du thermoformage du panneau.

11. Panneau selon l'une des revendications précédentes, **caractérisé en ce que** l'épaisseur de la feuille (10) d'étanchéité est comprise entre 1 et 5 mm environ, et celle de la couche (12) d'insonorisation entre 8 et 32 mm environ.

12. Panneau selon l'une des revendications précédentes, **caractérisé en ce que** la densité de la couche (12) d'insonorisation est comprise entre 100 et 400 g/m² environ.

13. Panneau selon l'une des revendications précédentes, **caractérisé en ce que** la feuille (10) d'étanchéité porte un cordon (16) de matière adhésive ou un film de matière adhésive recouvrant une partie au moins de sa surface.

14. Panneau selon l'une des revendications précédentes, **caractérisé en ce qu'**une face de la feuille (10) d'étanchéité porte un film de matière thermoplastique.

15. Procédé de fabrication d'un panneau d'étanchéité et d'insonorisation, en particulier pour véhicule automobile, comprenant la fixation par soudure aux ultra-sons, sur au moins une feuille (10) d'étanchéité en matière plastique cellulaire et thermoformable d'une couche (12) d'insonorisation formée de fibres fines entremêlées de matière plastique identique ou compatible avec celle de la feuille d'étanchéité, la couche (12) d'insonorisation étant un mélange de fibres de finesses différentes, inférieures à 0, 5 tex, comprenant environ 10 à 30% en poids de fibres d'une finesse inférieure à 0,1 tex et par exemple d'environ 0,08-0,09 tex et environ 25 à 45% en poids de fibres ayant une finesse comprise entre 0,1 et 0,2 tex.

## Claims

1. Sealing/soundproofing panel, in particular for a motor vehicle, comprising at least one sealing sheet (10) made of thermoformable cellular plastic, to which a soundproofing layer (12) formed from fine intermingled plastic fibres is fixed, **characterized in that** the soundproofing layer (12) is a mixture of fibres of different fineness, of less than 0.5 tex, comprising about 10 to 30% by weight of fibres with a fineness of less than 0.1 tex, for example about 0.08 - 0.09 tex, and about 25 to 45% by weight of fibres having a fineness between 0.1 and 0.2 tex.

2. Panel according to Claim 1, **characterized in that** the soundproofing layer (12) comprises composite fibres formed from polymers having different softening temperatures, one of these polymers having a softening temperature below the thermoforming temperatures used for forming the panel.

3. Panel according to Claim 1, **characterized in that** the soundproofing layer (12) comprises composite fibres formed from a core with one thermoplastic covered or surrounded by another thermoplastic identical to or compatible with the material of the sealing sheet (10).

4. Panel according to Claim 3, **characterized in that** the composite fibres comprise a polyester core and a polypropylene coating or shell.

5. Panel according to one of Claims 2 to 4, **characterized in that** the soundproofing layer (12) comprises about, 20 to 40% by weight of the aforementioned composite fibres having a fineness of about 0.4 - 0.5 tex.

6. Panel according to one of Claims 1 to 5, **characterized in that** the soundproofing layer (12) comprises about 10 to 20% by weight of fibres having a fineness between 0.3 and 0.4 tex.

7. Panel according to one of the preceding claims, **characterized in that** the soundproofing layer (12) is essentially made of polyester fibres.

8. Panel according to Claim 7, **characterized in that** the soundproofing layer (12) comprises:
- about 20% of polyester fibres having a fineness of around 0.08 - 0.09 tex;
- about 35% of polyester fibres having a fineness of around 0.15 - 0.18 tex;
- about 15% of polyester fibres having a fineness of around 0.3 - 0.4 tex; and
- about 30% of composite fibres having a fineness of about 0.4 - 0.5 tex, comprising a polyester core and a coating or shell of uncrosslinked polypropylene fibres.

9. Panel according to one of the preceding claims, **characterized in that** the soundproofing layer (12) includes a few per cent by weight of an acrylic resin or the like.

10. Panel according to one of the preceding claims, **characterized in that** the soundproofing layer (12) has locally a reduced thickness as a result of thermal compression while the panel is being thermoformed.

11. Panel according to one of the preceding claims, **characterized in that** the thickness of the sealing sheet (10) is between about 1 and 5 mm while that of the soundproofing layer (12) is between about 8 and 32 mm.

12. Panel according to one of the preceding claims, **characterized in that** the density of the soundproofing layer (12) is between about 100 and 400 g/m².

13. Panel according to one of the preceding claims, **characterized in that** the sealing sheet (10) bears a bead (16) of adhesive or a film of adhesive covering at least part of its surface.

14. Panel according to one of the preceding claims, **characterized in that** one face of the sealing sheet (10) bears a thermoplastic film.

15. Process for manufacturing a sealing/soundproofing panel, in particular for a motor vehicle, which includes the fastening, by ultrasonic welding, onto at least one sealing sheet (10) made of thermoformable cellular plastic, of a soundproofing layer (12) formed from fine intermingled fibres of a plastic identical to or compatible with that of the sealing sheet, the soundproofing layer (12) being a mixture of fibres of different fineness, of less than 0.5 tex, comprising about 10 to 30% by weight of fibres with a fineness of less than 0.1 tex, for example about 0.08 - 0.09 tex, and about 25 to 45% by weight of fibres having a fineness between 0.1 and 0.2 tex.

## Patentansprüche

1. Dichtungs- und Schalldämpfplatte insbesondere für Kraftfahrzeug, mindestens eine Dichtungsplatte (10) aus warmverformbarem Schaumkunststoff umfassend, auf der eine Schalldämpfungslage (12) befestigt ist, die aus gemischten feinen Kunststofffasern besteht, **dadurch gekennzeichnet, dass** die Schalldämpfungslage (12) ein Gemisch aus Fasern unterschiedlicher Feinheit von weniger als 0,5 tex ist, ungefähr 10 bis 30 Gewichtsprozent mit einer Feinheit von weniger als 0,1 tex und beispielsweise ungefähr 0,08 - 0,09 tex umfassend und ungefähr 25 bis 45 Gewichtsprozent an Fasern mit einer Feinheit von 0,1 bis 0,2 tex.

2. Platte nach Patentanspruch 1, **dadurch gekennzeichnet, dass** die Schalldämpfungslage (12) Verbundfasern umfasst, bestehend aus Polymeren mit unterschiedlichen Erweichungstemperaturen, wobei eines dieser Polymere eine Erweichungstemperatur hat, die unter den Warmformungstemperaturen liegt, die für die Formung der Platte verwendet werden. '

3. Platte nach Patentanspruch 1, **dadurch gekennzeichnet, dass** die Schalldämpfungslage (12) Verbundfasern umfasst, bestehend aus einem Kern aus einem thermoplastischen Werkstoff, bedeckt mit oder umgeben von einem anderen themoplastischen Werkstoff, der mit dem Werkstoff der Dichtungsplatte (10) identisch oder kompatibel ist.

4. Platte nach Patentanspruch 3, **dadurch gekennzeichnet, dass** die Verbundfasern einen Kern aus Polyester umfassen, und eine Beschichtung oder Umhüllung aus Polypropylen.

5. Platte nach einem der Patentansprüche 2 bis 4, **dadurch gekennzeichnet, dass** die Schalldämpfungslage (12) ungefähr 20 bis 40 Gewichtsprozent oben genannter Verbundfasern mit einer Feinheit von ungefähr 0,4 - 0,5 tex enthält.

6. Platte nach einem der Patentansprüche 1 bis 5, **dadurch gekennzeichnet, dass** die Schalldämpfungslage (12) ungefähr 10 bis 20 Gewichtsprozent an Fasern mit einer Feinheit von ungefähr 0,3 - 0,4 tex enthält.

7. Platte nach einem der vorangehenden Patentansprüche, **dadurch gekennzeichnet, dass** die Schalldämpfungslage (12) im Wesentlichen aus Polyesterfasern besteht.

8. Platte nach Patentanspruch 7, **dadurch gekennzeichnet, dass** die Schalldämpfungslage (12) umfasst:
- ungefähr 20% Polyesterfasern mit einer Feinheit in der Größenordnung von 0,08 - 0,09 tex,
- ungefähr 35% Polyesterfasern mit einer Feinheit in der Größenordnung von 0,15 - 0,18 tex,
- ungefähr 15% Polyesterfasern mit einer Feinheit in der Größenordnung von 0,3 - 0,4 tex,
- ungefähr 30% Verbundfasern mit einer Feinheit in der Größenordnung von 0,4 - 0,5 tex, einen Kern aus Polyester und eine Beschichtung oder Umhüllung der Fasern aus nicht vernetztem Polypropylen umfassend.

9. Platte nach einem der vorangehenden Patentansprüche, **dadurch gekennzeichnet, dass** die Schalldämpfungslage (12) einige Gewichtsprozent Akrylharz oder Ähnliches enthält.

10. Platte nach einem der vorangehenden Patentansprüche, **dadurch gekennzeichnet, dass** die Schalldämpfungslage (12) aufgrund einer Warmkompression, die bei der Warmverformung der Platte erfolgt, lokal geringere Dicke aufweist.

11. Platte nach einem der vorangehenden Patentansprüche, **dadurch gekennzeichnet, dass** die Dicke der Dichtungsplatte (10) zwischen ungefähr 1 und 5 mm liegt und die der Schalldämpfungslage (12) zwischen ungefähr 8 und 32 mm.

12. Platte nach einem der vorangehenden Patentansprüche, **dadurch gekennzeichnet, dass** die Dichte der Schalldämpfungslage (12) zwischen ungefähr 100 und 400 g/m² liegt.

13. Platte nach einem der vorangehenden Patentansprüche, **dadurch gekennzeichnet, dass** die Dichtungsplatte (10) ein Band (16) aus Klebstoff trägt oder eine dünne Schicht aus Klebstoff, die mindestens einen Teil ihrer Oberfläche bedeckt.

14. Platte nach einem der vorangehenden Patentansprüche, **dadurch gekennzeichnet, dass** eine Seite der Dichtungsplatte (10) eine dünne Schicht aus thermoplastischem Werkstoff trägt.

15. Verfahren zur Herstellung einer Dichtungs- und Schalldämpfungsplatte insbesondere für Kraftfahrzeug, die Befestigung auf mindestens einer Dichtungsplatte (10) aus warmverformbarem Schaumkunststoff einer Schalldämpfungslage (12), bestehend aus gemischten feinen Fasern aus einem Kunststoff, der mit dem der Dichtungsplatte identisch oder kompatibel ist, durch Ultraschallschweißen umfasst, wobei die Schalldämpfungslage (12) ein Gemisch aus Fasern unterschiedlicher Feinheiten von weniger als 0,5 tex ist, ungefähr 10 bis 30 Gewichtsprozent an Fasern einer Feinheit von weniger als 0,1 tex und beispielsweise von ungefähr 0,08 - 0,09 tex umfassend und ungefähr 25 bis 45 Gewichtsprozent an Fasern mit einer Feinheit zwischen 0,1 und 0,2 tex.
